# EUROPEAN PATENT APPLICATION

(11) **EP 4 652 904 A1**
(43) Date of publication of application: **26.11.2025**
(21) Application number: 24766470.9
(22) Date of filing: 06.03.2024
(51) Int. Cl.: A47J 31/44, A47J 31/46, A47J 31/30

(54) **COFFEE MAKING SYSTEM**

(30) Priority: 07.03.2023 CN 202310254744
(71) Applicant: Maxi (Beijing) International Brand Management Co., Ltd., Beijing 100081 (CN)
(72) Inventor: CHEN, Yu, Beijing 100081 (CN); NG, Kwok Yui Lawrence, Beijing 100081 (CN)
(74) Representative: Ponti & Partners, S.L.P
(86) International application number: PCT/CN2024/080322
(87) International publication number: WO 2024/183755

(57) **Abstract**

The present application relates to the technical field of coffee making machines, in particular to a coffee making system. The coffee making system comprises a primary-secondary boiler, an extraction heating boiler, and a steam heating boiler, wherein the primary-secondary boiler comprises a primary boiler and a secondary boiler arranged in the primary boiler; the primary boiler is in communication with the extraction heating boiler; and the secondary boiler is in communication with the steam heating boiler. **It** can be seen that a primary boiler integrated heating system provided by the present application changes the structure of a primary-secondary boiler in the prior art, that is, a primary boiler is no longer used for pre-storing a large amount of steam for milk frothing, and a secondary boiler is no longer used for pre-storing water for extraction, but the primary boiler is used for pre-storing the water for extracting coffee, and the secondary boiler is used for pre-storing warm water for forming steam, that is, the secondary boiler and the primary boiler are reversed, and cooperate with the extraction heating boiler and the steam heating boiler, thereby realizing rapid, efficient, continuous coffee making; coffee can be made immediately after the system is used, without waiting; in addition, the temperatures of water and steam are stable, ensuring the quality of coffee; and the size of the whole machine is small, and more energy is saved on.

## Description

### TECHNICAL FIELD

The present disclosure claims the priority to the Chinese patent application No. 2023102547445 filed with the Chinese Patent Office on March 7, 2023, and entitled "COFFEE MAKING SYSTEM", the contents of which are incorporated herein by reference in entirety.

The present disclosure relates to the technical field of coffee machines, and particularly relates to a coffee making system.

### BACKGROUND ART

At present, coffee machines on the market often adopt a heating mode of sub-mother boilers or instant heating boilers, wherein the principle of the sub-mother boiler is to heat the mother boiler to boiling and store a sufficient amount of steam, and the sub-boiler is arranged in the mother boiler, and water in the sub-boiler is heated to an appropriate water temperature by hot water of the mother boiler. The advantage thereof is that the capacity of the mother boiler is large, which can store sufficient energy steam for milk frothing use, and water in the sub-boiler can also be heated simultaneously. Because the stored energy is sufficient, it is relatively stable during continuous cup dispensing. However, the disadvantage is also obvious. Since the mother boiler needs to be heated to boiling and store a sufficient amount of steam, it is necessary to maintain a large amount of steam to meet the demand for continuous cup dispensing, and thus, it is necessary to make the sub-mother boiler have a relatively large capacity, which results in a long preheating duration. In addition, because the sub-boiler relies on the hot water of the mother boiler to transfer heat through the furnace wall of the sub-boiler to achieve heating, the water temperature in the sub-boiler is difficult to control and unstable.

The instant heating boiler instantly heats room-temperature water into extraction water or steam for milk frothing. Since it belongs to instant heating, the temperature of the extraction water or the steam is extremely unstable. Especially when producing steam, the water content of the steam is high, which affects the milk frothing effect. In addition, because the inlet water temperature is low, the energy consumption is higher when heating to a preset temperature.

It can be seen that the heating structure of the existing coffee machine still has relatively large problems, and it is therefore urgently necessary to develop a coffee machine heating structure capable of rapid, efficient, and high-quality continuous cup dispensing.

### SUMMARY

The objective of the present disclosure is to provide a coffee making system, which to a certain extent resolves the technical problem in the prior art of urgently needing to develop a coffee machine heating structure capable of fast, efficient, and high-quality continuous cup dispensing.

The present disclosure provides a coffee making system, comprising: a sub-mother boiler, an extraction heating boiler, and a steam heating boiler, wherein the sub-mother boiler comprises a mother boiler and a sub-boiler arranged in the mother boiler, and
the mother boiler is in communication with the extraction heating boiler, and the sub-boiler is in communication with the steam heating boiler.

In the above technical solution, further, the coffee making system further comprises a water storage container, an extraction boiler pump, and a steam boiler pump, wherein

the mother boiler is in communication with the water storage container through the extraction boiler pump, and the sub-boiler is in communication with the water storage container through the steam boiler pump.

In any of the above technical solutions, further, the coffee making system further comprises a coffee extraction component and a milk frothing component, wherein the coffee extraction component is in communication with the extraction heating boiler, and the milk frothing component is in communication with the steam heating boiler.

In any of the above technical solutions, further, the coffee making system further comprises a first three-way valve, a switch valve, a first waste water container, a first pressure detecting component, and a first pressure limiting valve, wherein
an outlet of the extraction heating boiler is in communication with the coffee extraction component and the first waste water container respectively via the first three-way valve, an exhaust port of the extraction heating boiler is in communication with the first waste water container via the switch valve;
the first pressure detector is provided in the extraction heating boiler and is configured to detect a water pressure of the extraction heating boiler;
the first pressure limiting valve is provided on a pipeline in communication between the first three-way valve and the water outlet of the extraction heating boiler; and
the mother boiler is in communication with the first waste water container via a pressure relief pipeline, and a pressure valve is arranged on the pressure relief pipeline.

**In** any of the above technical solutions, further, the extraction heating boiler comprises a first boiler supporting main body, and a first boiler shell, a first heating member, and a first conveying pipe member which are embedded in the first boiler supporting main body; the first heating member and the first conveying pipe member are arranged surrounding a periphery of the first boiler shell, and the first heating member is arranged close to the first boiler shell; and
the first boiler shell is provided with a first heating storage cavity, and a water inlet, a water outlet, and an exhaust port which are in communication with the first heating storage cavity; the first conveying pipe member is in communication with the water inlet of the first heating storage cavity; and
the first pressure detector is provided on a pipeline in communication between the first conveying pipe member and a water inlet of the first heating storage cavity, and the first pressure limiting valve is provided on a pipeline in communication between the first three-way valve and a water outlet of the first heating storage cavity.

**In** any of the above technical solutions, further, the extraction heating boiler is an instant heating boiler.

In any of the above technical solutions, further, the coffee making system further comprises a second three-way valve, a second waste water container, and a second pressure limiting valve; a gas outlet of the steam heating boiler is respectively in communication with the milk frothing component and the second waste water container via the second three-way valve; and
the second pressure limiting valve is arranged on a pipeline in communication between the second three-way valve and the gas outlet of the steam heating boiler.

In any of the above technical solutions, further, the steam heating boiler comprises a second boiler supporting main body, and a second boiler shell, a second heating member, and a second conveying pipe member which are embedded in the second boiler supporting main body; the second heating member and the second conveying pipe member are arranged surrounding a periphery of the second boiler shell, and the second heating member is arranged close to the second boiler shell; and
the second boiler shell is provided with a second heating storage cavity, and an inlet end and a gas outlet which are in communication with the second heating storage cavity; the second conveying pipe member is in communication with an inlet end of the heating storage cavity; the second pressure limiting valve is arranged on a pipeline in communication between the second three-way valve and the gas outlet of the second heating storage cavity.

In any of the above technical solutions, further, the steam heating boiler is an instant heating boiler.

In any of the above technical solutions, further, the sub-mother boiler also comprises a third heating member, and the third heating member is arranged at an inner bottom of the mother boiler and arranged surrounding the periphery of the sub-boiler;
the mother boiler is provided in a cylindrical structure; and/or
the sub-boiler is a pipe member spirally arranged along a height direction of the mother boiler.

The beneficial effects of the present disclosure compared to the prior art are as follows.

The coffee making system provided by the present disclosure changes the structure of the sub-mother boiler in the prior art. It no longer uses the mother boiler to pre-store a large amount of steam for milk frothing and the sub-boiler to pre-store water for extraction, but instead uses the mother boiler to pre-store water for coffee extraction and the sub-boiler to pre-store warm water for generating steam, that is, the sub-boiler and the mother boiler are reversed. In combination with the extraction heating boiler and the steam heating boiler, rapid and efficient continuous cup dispensing is achieved, and it belongs to a mode of dispensing upon demand without waiting.

In addition, since the mother boiler in the sub-mother boiler does not need to pre-store a large amount of steam, the size of the sub-mother boiler is greatly reduced, occupying less space, which is conducive to miniaturized design of the coffee machine.

Furthermore, compared with the prior art in which the mother boiler needs to be heated to boiling and kept boiling to maintain steam supply and the sub-boiler water temperature for extraction, in the sub-mother boiler of the present disclosure, the mother boiler only pre-stores warm water at a semi-temperature or a designated temperature, which, compared with the high-temperature steam stored in the traditional sub-mother boiler, plays a role in effectively saving energy.

### BRIEF DESCRIPTION OF DRAWINGS

In order to more clearly illustrate the specific embodiments of the present disclosure or the technical solution in the prior art, the drawings required to be used in the description of the specific embodiments or the prior art will be briefly introduced as follows. Obviously, the drawings described below are some embodiments of the present disclosure. Those of ordinary skill in the art, without paying inventive labor, may also obtain other drawings according to these drawings.
FIG. 1 is a schematic structural diagram of a coffee making system provided in an embodiment of the present disclosure;
FIG. 2 is another schematic structural diagram of a coffee making system provided in an embodiment of the present disclosure;
FIG. 3 is an assembly diagram of a sub-mother boiler and a water storage container provided in an embodiment of the present disclosure;
FIG. 4 is a sectional view taken along line A-A of FIG. 3;
FIG. 5 is a schematic structural diagram of an extraction heating boiler provided in an embodiment of the present disclosure;
FIG. 6 is another schematic structural diagram of an extraction heating boiler provided in an embodiment of the present disclosure;
FIG. 7 is a sectional view taken along line B-B of FIG. 6;
FIG. 8 is a schematic structural diagram of a steam heating boiler provided in an embodiment of the present disclosure;
FIG. 9 is another schematic structural diagram of a steam heating boiler provided in an embodiment of the present disclosure; and
FIG. 10 is a sectional view taken along line C-C of FIG. 9.

### Reference numerals:

1 - water storage container, 2 - extraction boiler pump, 3 - steam boiler pump, 4 - sub-mother boiler, 41 - mother boiler, 42 - sub-boiler, 43 - third heating member, 44 - pressure relief pipeline, 5 - extraction heating boiler, 51 - first boiler supporting main body, 52 - first boiler shell, 521 - first heating storage cavity, 53 - first heating member, 54 - first conveying pipe member, 55 - first communicating pipeline, 56 - water inlet, 57 - water outlet, 58 - exhaust port, 59 - first temperature sensor, 510 - water level sensor, 511 - third temperature sensor, 512 - sealing ring, 6 - first three-way valve, 7 - switch valve, 8 - first waste water container, 9 - first pressure detecting component, 10 - first pressure limiting valve, 11 - coffee extraction component, 12 - steam heating boiler, 121 - second boiler supporting main body, 122 - second boiler shell, 1221 - second heating storage cavity, 123 - second heating member, 124 - second conveying pipe member, 125 - second communicating pipeline, 126 - inlet end, 127 - gas outlet, 128 - second temperature sensor, 129 - fourth temperature sensor, 13 - second three-way valve, 14 - second waste water container, 15 - second pressure limiting valve, 16 - milk frothing member.

### DETAILED DESCRIPTION OF EMBODIMENTS

A clear and complete description of the technical solutions of the present disclosure will be given below in connection with the drawings. Obviously, the described embodiments are a portion of the embodiments of the present disclosure and not all of the embodiments.

The components of the embodiments of the present disclosure, which are generally described and shown in the drawings herein, can be arranged and designed in a variety of different configurations. Accordingly, the following detailed description of the embodiments of the present disclosure provided in the drawings is not intended to limit the scope of the present disclosure for which protection is claimed, but merely represents selected embodiments of the present disclosure.

Based on the embodiments in the present disclosure, all other embodiments obtained by those of ordinary skill in the art without making inventive efforts are within the scope of protection of the present disclosure.

In the description of the present disclosure, it should be noted that the terms "center", "top", "bottom", "left", "right", "vertical", "horizontal", "inner", "outer" "right", 'vertical', 'horizontal', 'inside', 'outside', and the like indicating orientation or positional relationships are based on the orientation or positional relationships shown in the drawings. These terms are merely intended to facilitate the description of the present disclosure and simplify the description and are not intended to indicate or imply that the referenced devices or elements must have a specific orientation, be constructed in a specific orientation, or operate in a specific orientation. Therefore, these terms should not be construed as limiting the present disclosure. In addition, the terms "first", "second", and "third" are used for descriptive purposes only and are not to be construed as indicating or implying relative importance.

In the description of the present disclosure, it is important to note that unless otherwise clearly stipulated and limited, the terms "mount", "link", and "connect" should be understood in a broad sense, for example, it can be a fixed connection, a detachable connection, or an integral connection; it can be a mechanical connection or an electrical connection; and it can be a direct connection, an indirect connection through an intermediary, or an internal communication between two components. Those of ordinary skill in the art can understand the specific meanings of the above terms in the present disclosure according to specific situations.

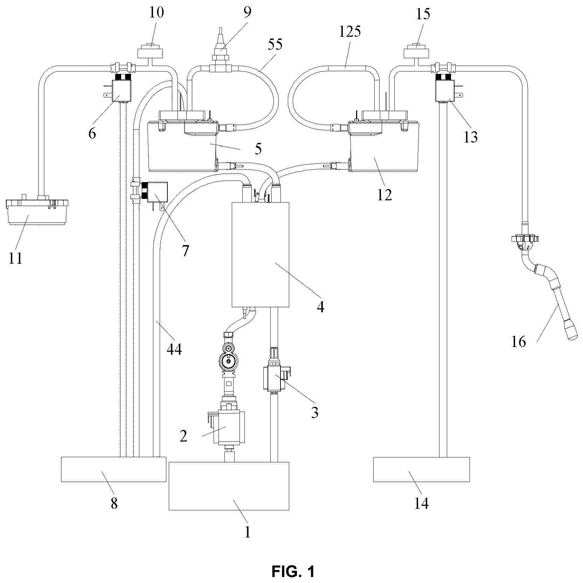

The following describes, with reference to FIG. 1 to FIG. 10, a coffee making system according to some embodiments of the present disclosure.

### Embodiment 1

Referring to FIG. 1 to FIG. 4, an embodiment of the present disclosure provides a coffee making system, comprising: a sub-mother boiler 4, an extraction heating boiler 5, and a steam heating boiler 12, wherein the sub-mother boiler 4 comprises a mother boiler 41 and a sub-boiler 42 arranged in the mother boiler 41, the mother boiler 41 is in communication with the extraction heating boiler 5, the sub-boiler 42 is in communication with the steam heating boiler 12, and both the mother boiler 41 and the sub-boiler 42 are configured to pre-store warm water.

Based on the structure described above, it can be understood that the present disclosure provides a new heating structure for making coffee, which comprises the sub-mother boiler 4, the extraction heating boiler 5, and the steam heating boiler 12. The mother boiler 41 heats water to a semi-temperature or a designated temperature set by a customer, thereby greatly increasing the inlet water temperature of the extraction heating boiler 5, enabling the extraction heating boiler 5 to quickly heat the incoming warm water to a preset extraction temperature. This achieves rapid cup dispensing. In particular, the mother boiler 41 pre-stores water for multiple cups of extraction coffee, and as the coffee extraction proceeds, water is continuously replenished to the mother boiler 41, thereby facilitating rapid and continuous cup dispensing. Moreover, since the water temperature entering the extraction heating boiler 5 is constant, the extraction temperature is thereby kept constant, which helps to ensure the quality of each cup of coffee.

The mother boiler 41 is able to heat water in the sub-boiler 42, thereby greatly increasing the inlet water temperature of the steam heating boiler 12, which helps to improve the steam conversion rate and reduces the water content in the steam, thereby improving the milk frothing effect. Furthermore, the sub-boiler 42 can pre-store warm water for milk frothing, enabling rapid and continuous milk frothing operations. Moreover, since the inlet water temperature of the steam heating boiler 12 is constant, the steam is more stable, which helps to ensure the quality of each cup of coffee.

It can be seen that the integrated heating system of the sub-mother boiler provided by the present disclosure changes the structure of the sub-mother boiler in the prior art. It no longer uses the mother boiler to pre-store a large amount of steam for milk frothing and the sub-boiler to pre-store water for extraction, but instead uses the mother boiler to pre-store water for coffee extraction and the sub-boiler to pre-store warm water for generating steam, that is, the sub-boiler and the mother boiler are reversed. In combination with the extraction heating boiler 5 and the steam heating boiler 12, rapid and efficient continuous cup dispensing is achieved, and it belongs to a mode of dispensing upon demand without waiting.

In addition, since the mother boiler 41 in the sub-mother boiler 4 does not need to pre-store a large amount of steam, the size of the sub-mother boiler 4 is greatly reduced, occupying less space, which is conducive to miniaturized design of the coffee machine.

Furthermore, compared with the prior art in which the mother boiler needs to be heated to boiling and kept boiling to maintain steam supply and the sub-boiler water temperature for extraction, in the sub-mother boiler 4 of the present disclosure, the mother boiler 41 only pre-stores warm water at a semi-temperature or a designated temperature, which, compared with the high-temperature steam stored in the traditional sub-mother boiler, plays a role in effectively saving energy.

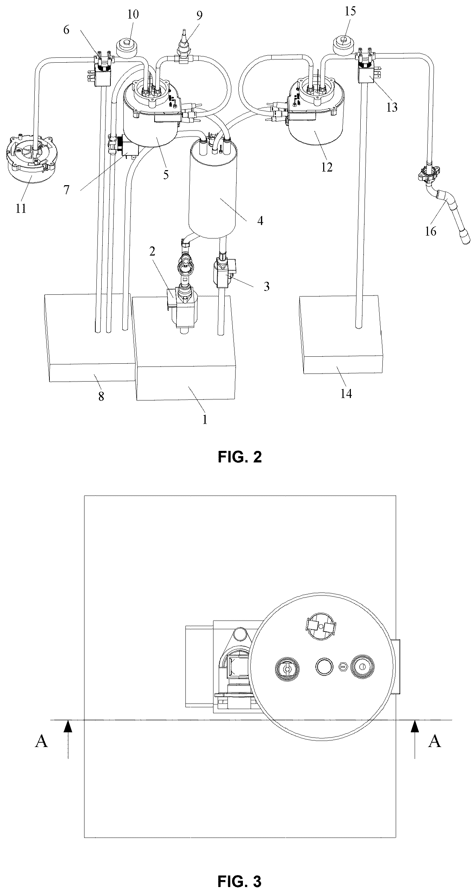

In this embodiment, preferably, as shown in FIG. 1 and FIG. 2, the coffee making system further comprises a water storage container 1, an extraction boiler pump 2, and a steam boiler pump 3.

The mother boiler 41 is in communication with the water storage container 1 through the extraction boiler pump 2, and the sub-boiler 42 is in communication with the water storage container 1 through the steam boiler pump 3.

Further preferably, the coffee making system further comprises a coffee extraction component 11 and a milk frothing component 16, wherein the coffee extraction component 11 is in communication with the extraction heating boiler 5, and the milk frothing component 16 is in communication with the steam heating boiler 12. It is noted that the coffee extraction component 11 is a coffee extraction head in the prior art, and the milk frothing component 16 is a steam jet head for a coffee machine in the prior art, which will not be described in detail herein.

According to the structure described above, the extraction boiler pump 2 provides cup dispensing power for coffee extraction, that is, the extraction boiler pump 2 pumps water from the water storage container 1 into the mother boiler 41, the preheated warm water in the mother boiler 41 then enters the extraction heating boiler 5 under the action of pressure, and finally is discharged sequentially through the extraction heating boiler 5 and the coffee extraction component 11 for coffee extraction.

The steam boiler pump 3 provides power for discharging steam, that is, the steam boiler pump 3 pumps water from the water storage container 1 into the sub-boiler 42, and the preheated warm water in the sub-boiler 42 then enters the steam heating boiler 12 under the action of pressure, and is finally discharged sequentially through the steam heating boiler 12 and the milk frothing component 16 for milk frothing.

In this embodiment, preferably, as shown in FIG. 1 and FIG. 2, the coffee making system further comprises a first three-way valve 6, a switch valve 7, a first waste water container 8, a first pressure detecting component 9, and a first pressure limiting valve 10.

An outlet 57 of the extraction heating boiler 5 is in communication with the coffee extraction component 11 and the first waste water container 8 respectively via the first three-way valve 6. An exhaust port 58 of the extraction heating boiler 5 is in communication with the first waste water container 8 via the switch valve 7.

The first pressure detector is provided in the extraction heating boiler 5 and is configured to detect a water pressure of the extraction heating boiler 5.

The first pressure limiting valve 10 is provided on a pipeline in communication between the first three-way valve 6 and the outlet 57 of the extraction heating boiler 5. The first pressure limiting valve 10 serves to limit pressure to avoid excessive pressure, and is preferably an electronic pressure limiting valve.

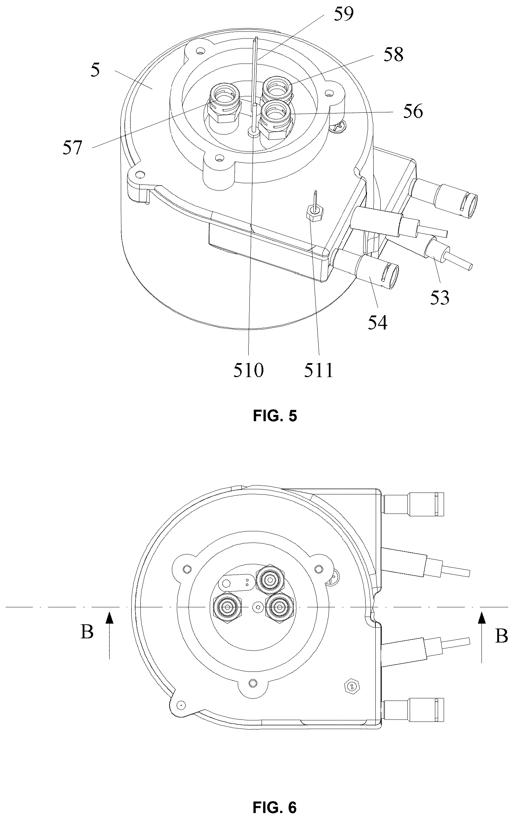

Further, preferably, as shown in FIG. 5 to FIG. 7, the extraction heating boiler 5 comprises a first boiler supporting main body, and a first boiler shell 52, a first heating member 53, and a first conveying pipe member 54 which are embedded in the first boiler supporting main body. The first heating member 53 and the first conveying pipe member 54 are arranged around a periphery of the first boiler shell 52, and the first heating member 53 is arranged close to the first boiler shell 52. It can be seen that the first heating member 53 is located between the first boiler shell 52 and the first conveying pipe member 54, and is capable of heating both simultaneously, and both are arranged spirally, increasing a heating area and improving heating efficiency.

The first boiler shell 52 is provided with a first heating storage cavity 521, and a water inlet 56, a water outlet 57, and an exhaust port 58 which are in communication with the first heating storage cavity 521. The first conveying pipe member 54 is in communication with the water inlet 56 of the first heating storage cavity 521.

The first pressure detecting component 9 is provided on a pipeline, i.e., the first connecting pipeline 55, which is in communication between the first conveying pipe member 54 and the water inlet 56 of the first heating storage cavity 521. The first pressure limiting valve 10 is provided on a pipeline in communication between the first three-way valve 6 and the water outlet 57 of the first heating storage cavity 521. It can be seen that warm water output from the mother boiler 41 first flows through the first conveying pipe member 54 and is heated by the first heating member 53, and then flows into the first heating storage cavity 521 to be heated again by the first heating member 53, that is, secondary heating is achieved. Therefore, the temperature of the entire heating environment is higher and more stable. The hot water rapidly heated can be stored in the first heating storage cavity 521 to ensure a constant water temperature, further improving the coffee extraction effect, and achieving instant heating and use without waiting. In addition, a stable water pressure is formed in the secondary heating cavity to meet extraction pressure.

Based on the structure described above, it can be understood that the above structure can achieve constant-pressure extraction and variable-pressure extraction. Specifically, the constant-pressure extraction solution is as follows. The first pressure detecting component 9 is used to detect an actual pressure value in real time, that is, the pressure in the first boiler shell 52. When the actual pressure value is equal to a preset constant pressure value, the extraction boiler pump 2 operates, and at the same time, the first three-way valve 6 is adjusted so that the outlet 57 of the first heating storage cavity 521 of the extraction heating boiler 5 is in communication with the extraction component to perform coffee extraction.

During coffee extraction, the first pressure detecting component 9 is used to detect the actual pressure value in real time. When the actual pressure value is not equal to the preset constant pressure value, the voltage and frequency of the extraction boiler pump 2 are adjusted so that the actual pressure value is equal to the preset constant pressure value.

When extraction is completed, the first three-way valve 6 is adjusted so that the coffee extraction component 11 is in communication with the first waste water container 8, thereby releasing pressure in the extraction pipeline into the first waste water container 8. At the same time, the first pressure detecting component 9 detects the actual pressure value in the first heating storage cavity 521 of the extraction heating boiler 5. When the actual pressure value is greater than the preset constant pressure value, the first three-way valve 6 is adjusted so that the outlet 57 of the first heating storage cavity 521 of the extraction heating boiler 5 is in communication with the first waste water container 8 to release pressure, so that the actual pressure value is equal to the preset constant pressure value. When the actual pressure value is less than the preset constant pressure value, the first three-way valve 6 is adjusted to close all water circuits, and the extraction boiler pump 2 is started so that the actual pressure value reaches the preset constant pressure value, and then the extraction boiler pump 2 is stopped.

Variable pressure extraction solution is as follows. The first pressure detecting component 9 is used to detect the actual pressure value in real time. When the actual pressure value is greater than or equal to the lower pressure limit value, the extraction boiler pump 2 operates, and at the same time, the first three-way valve 6 is adjusted, so that the outlet 57 of the first heating storage cavity 521 of the extraction heating boiler 5 is in communication with the extraction component, so as to realize the operation of coffee extraction.

During coffee extraction, the first pressure detecting component 9 is used to detect the actual pressure value in real time. When the actual pressure value rises to the upper pressure limit value, the voltage and frequency of the extraction boiler pump 2 are adjusted so that the actual pressure value is maintained and not higher than the upper pressure limit value.

When extraction is completed, the first three-way valve 6 is adjusted so that the coffee extraction component 11 is in communication with the first waste water container 8, thereby releasing pressure in the extraction pipeline into the first waste water container 8. At the same time, the first pressure detecting component 9 detects the actual pressure value in the first heating storage cavity 521 of the extraction heating boiler 5. When the actual pressure value is greater than the upper pressure limit value, the first three-way valve 6 is adjusted so that the outlet 57 of the first heating storage cavity 521 of the extraction heating boiler 5 is in communication with the first waste water container 8 to release pressure, so that the actual pressure value is not higher than the upper pressure limit value. When the actual pressure value is less than the lower pressure limit value, the first three-way valve 6 is adjusted to close all water circuits, and the extraction boiler pump 2 is started so that the actual pressure value reaches the lower pressure limit value, and then the extraction boiler pump 2 is stopped.

It is noted that, before constant-pressure extraction and variable-pressure extraction, the extraction boiler pump 2 needs to be started and the first three-way valve 6 is adjusted to open the DE water circuit, so as to discharge the air in the first heating storage cavity 521 of the extraction heating boiler 5, and then the DE water circuit is closed. The parameters of the extraction boiler pump 2, such as voltage and frequency, are adjusted until the actual pressure value is equal to the preset constant pressure value. During this process, the water level detecting component described below is adopted to monitor the water level at all times.

Combining the above, it can be known that the system can realize both constant-pressure extraction and variable-pressure extraction, thereby making coffee with different tastes to meet different needs of users.

In the present embodiment, preferably, as shown in FIG. 5, the coffee making system further includes a first temperature sensor 59, and the detection end of the first temperature sensor 59 extends into the first heating storage cavity 521.

Combining the above, it can be known that the first temperature sensor 59 can detect the water temperature in the first heating storage cavity 521 in real time, so as to control the extraction temperature more precisely, and preferably, the first temperature sensor 59 is an insertion type temperature sensor. In addition, a third temperature sensor 511 can also be integrated on the first boiler supporting main body 51, which is configured to monitor the temperature of the furnace body.

In the present embodiment, preferably, as shown in FIG. 5, the coffee making system further includes a water level sensor 510, and the detection end of the water level sensor 510 extends into the first heating storage cavity 521.

Combining the above, it can be known that the water level sensor 510 is used to detect the water level in the first heating storage cavity 521 at all times, so as to avoid problems such as excessively low or excessively high water level. Preferably, the water level sensor 510 is an insertion type water level sensor 510.

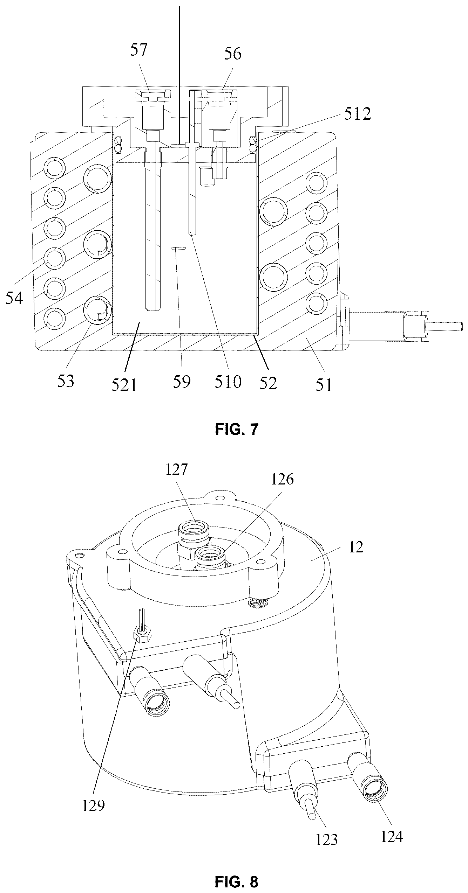

In the present embodiment, preferably, as shown in FIG. 7, the first heating member 53 is a heating tube member, and is arranged surrounding the outside of the first boiler shell 52 in a spiral manner, and the first conveying pipe member 54 is arranged surrounding the outside of the heating tube member, also in a spiral manner.

In the present embodiment, preferably, as shown in FIG. 7, the first boiler supporting main body comprises a first main body and a first top cover, the first main body forms a first mounting chamber, and the first boiler shell 52 is arranged in the first mounting chamber. The second heating member 123 and the second conveying pipe member 124 are embedded in the side wall of the first mounting chamber. The first top cover is covered on the top opening of the first mounting chamber to cover the first boiler shell 52, and a sealing ring 512 is arranged between the first end cover and the side wall of the first mounting chamber. The above-mentioned first temperature sensor 59 and water level sensor 510 can both be integrated on the first top cover, and the water inlet 56, the water outlet 57, and the exhaust port 58 are all arranged on the first top cover and provided with joints.

In the present embodiment, preferably, as shown in FIG. 1 and FIG. 2, the coffee making system further provides a second three-way valve 13, a milk frothing component 16, a second waste water container 14, and a second pressure limiting valve 15, wherein the gas outlet 127 of the steam heating boiler 12 is respectively in communication with the milk frothing component 16 and the second waste water container 14 via the second three-way valve 13, the second pressure limiting valve 15 is arranged on the pipeline in communication between the second three-way valve 13 and the gas outlet 127 of the steam heating boiler 12.

Further, preferably, as shown in FIG. 8 to FIG. 10, the steam heating boiler 12 includes a second boiler supporting main body 121, and a second boiler shell 122, a second heating member 123, and a second conveying pipe member 124 which are embedded in the second boiler supporting main body 121, wherein the second heating member 123 and the second conveying pipe member 124 are arranged surrounding the periphery of the second boiler shell 122, and the second heating member 123 is arranged close to the second boiler shell 122.

The second boiler shell 122 forms a second heating storage cavity 1221, and an inlet end 126 and a gas outlet 127 which are in communication with the second heating storage cavity 1221. The second conveying pipe member 124 is in communication with the inlet end 126 of the heating storage cavity, preferably via a second communicating pipeline 125. The second pressure limiting valve 15 is arranged on a pipeline in communication between the second three-way valve 13 and the gas outlet 127 of the second heating storage cavity 1221.

It can be seen that warm water output from the sub-boiler 42 firstly flows through the second conveying pipe member 124 and is rapidly heated into steam by the second heating member 123, and can be stored in the second heating storage cavity 1221, namely, a secondary heating chamber is enlarged. Thus, the temperature of the whole heating environment is higher and more stable, thereby making the steam drier, with higher and more stable temperature, and shortening the milk frothing duration. In addition, since the water vapor is stored in the secondary heating chamber, stable steam pressure can be formed in the secondary heating chamber, thereby solving the problem of unstable steam pressure.

Further, preferably, as shown in FIG. 1 and FIG. 2, the coffee making system also includes a second pressure limiting valve 15, and the second pressure limiting valve 15 is arranged on a pipeline in communication between the second three-way valve 13 and the gas outlet 127 of the second heating storage cavity 1221. Because the second pressure limiting valve 15 is additionally provided, the pressure in the second heating storage cavity 1221 is maintained below a certain preset pressure value, which can basically meet the condition of constant pressure. If further pressure control is required, a second pressure sensor can be adopted to detect the pressure in the second heating storage cavity 1221 in real time, and the steam pressure can be comprehensively controlled by adjusting the voltage and frequency of the steam boiler pump 3 and the power of the second heating member 123.

Further, preferably, the coffee making system also includes a second pressure sensor or a pressure gauge, and the second pressure sensor is arranged on a pipeline in communication between the second pressure limiting valve 15 and the gas outlet 127 of the steam heating boiler 12.

According to the above-described structure, the operation of milk frothing is completed as follows.

After startup, the three-way valve is adjusted, so that the second heating storage chamber 1221 of the second boiler shell 122 is in communication with the second waste water container 14, and the air in the second heating storage cavity 1221 is discharged into the second waste water container 14. Then, the water circuit is closed, the steam boiler pump 3 and the second heating member 123 are turned on, the warm water in the sub-boiler 42 is pumped into the second conveying pipe member 124 and heated into steam. The steam finally enters the second heating storage cavity 1221 and is reheated until the steam temperature reaches and is maintained at a first preset value. Then the steam boiler pump 3 is turned off, and the three-way valve is adjusted, so that the milk frothing component 16 is in communication with the second heating storage cavity 1221.

When milk frothing is required, the steam boiler pump 3 is turned on, and the pre-stored steam in the second heating storage cavity 1221 is ejected to perform milk frothing. Meanwhile, the warm water pre-stored in the sub-boiler 42 is pumped into the second conveying pipe member 124, reheated into steam by the second heating member 123, and stored in the second heating storage chamber 1221; and water in the water storage container 1 is replenished into the sub-boiler 42 and heated into warm water. During the milk frothing process, the second temperature sensor 128 is utilized to detect the steam temperature in the second heating storage cavity 1221 in real time, and when the temperature does not reach the preset value, the power of the second heating member 123 is adjusted so that the steam temperature reaches and maintains at the preset value.

After milk frothing is completed, the three-way valve is adjusted, so that the milk frothing component 16 is in communication with the second waste water container 14, and excess steam in the water circuit is discharged into the second waste water container 14. Then, the water circuit is closed, and the steam boiler pump 3 and the second heating member 123 are turned on until the steam temperature in the second heating storage cavity 1221 equals the preset value. Then, the steam boiler pump 3 is turned off, and the three-way valve is adjusted, so that the milk frothing component 16 is in communication with the second heating storage cavity 1221 to prepare for the next milk frothing operation.

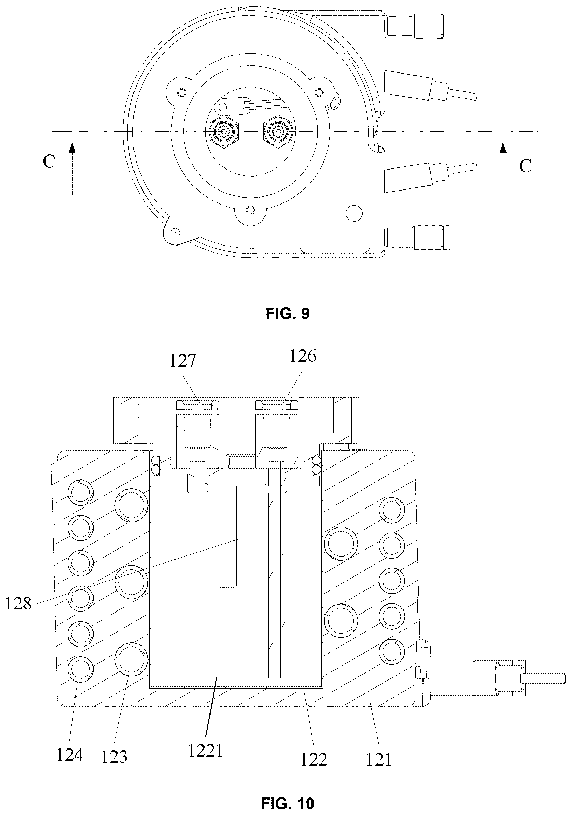

In the present embodiment, preferably, as shown in FIG. 10, the second heating member 123 is a heating tube member, and is arranged surrounding the outside of the second boiler shell 122 in a spiral manner. The second conveying pipe member 124 is arranged surrounding the outside of the heating tube member, also in a spiral manner.

In the embodiment, preferably, as shown in FIG. 8, the coffee making system also includes a second temperature sensor 128, wherein the detecting end of the second temperature sensor 128 extends into the second heating storage cavity 1221. The second temperature sensor 128 is capable of detecting the temperature of steam in the second heating storage cavity 1221 in real time and accurately, thereby more precisely controlling the temperature for milk frothing. In addition, a fourth temperature sensor 129 can also be integrated on the second boiler main body, which is configured to monitor the temperature of the furnace body.

In the present embodiment, preferably, as shown in FIG. 10, the second boiler supporting main body comprises a second main body and a second top cover, wherein the second main body forms a second mounting chamber, and the second boiler shell 122 is arranged in the second mounting chamber. The second heating member 123 and the second conveying pipe member 124 are embedded in the side wall of the second mounting chamber. The second top cover is covered on the top opening of the second mounting chamber to cover the second boiler shell 122, and a sealing ring 512 is arranged between the second end cover and the side wall of the second mounting chamber. The above-mentioned second temperature sensor 128 can be integrated on the first top cover, and the inlet end 126 and the gas outlet 127 are arranged on the second top cover and provided with joints. Preferably, the bottom end of the joint arranged at the inlet end 126 extends to the bottom of the second heating storage cavity 1221.

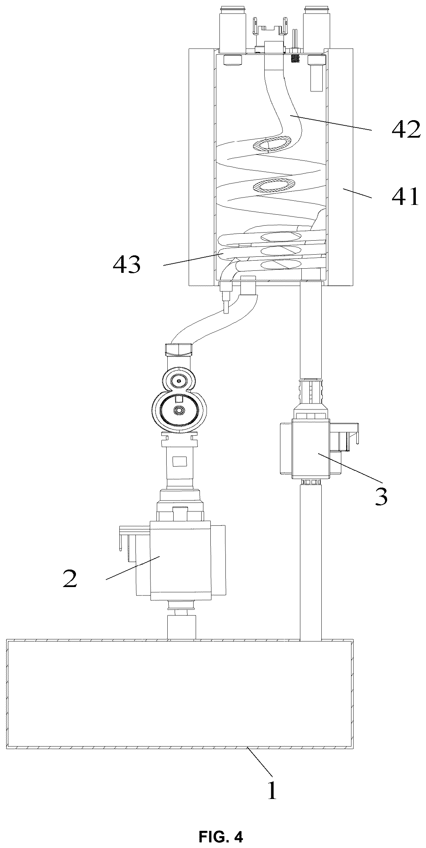

In the embodiment, preferably, as shown in FIG. 3 and FIG. 4, the sub-mother boiler 4 also includes a third heating member 43, and the third heating member 43 is arranged at the inner bottom of the mother boiler 41 and arranged surrounding the periphery of the sub-boiler 42.

According to the above-described structure, the third heating member 43 is configured to heat water at the bottom position of the mother boiler 41 and the sub-boiler 42, and preferably, the third heating member 43 is a heating pipe.

Further, preferably, the mother boiler 41 is provided in a cylindrical structure; and the sub-boiler 42 is a pipe member spirally arranged along the height direction of the mother boiler 41.

Further, preferably, in order to detect the temperature and water level in the mother boiler 41, a temperature sensor and a water level sensor 510 can also be provided, and the detecting ends extend into the mother boiler 41.

Further, preferably, as shown in FIG. 1, the mother boiler 41 of the sub-mother boiler 4 is also in communication with the first waste water container 8 via a pressure relief pipeline 44 for releasing pressure, and preferably, a pressure valve is arranged on the pipeline.

### Embodiment 2

The coffee making system in this embodiment provides an improvement based on the above embodiment, and the technical content disclosed in the above embodiment is not repeatedly described. The content disclosed in the above embodiment also belongs to the content disclosed in this embodiment.

The difference between the coffee making system shown in this embodiment and that in the above embodiment lies in that the extraction heating boiler 5 still adopts the structure of the above embodiment, and the steam heating boiler 12 is an instant heating boiler adopted in existing coffee machines. This instant heating boiler can be a matching structure of an instant heating block and a circulating pipeline. The instant heating block only heats the circulating pipeline. The instant heating boiler can also only include a single boiler chamber, and the heating pipeline only performs instant heating on this single boiler chamber. In summary, this part belongs to the prior art and is not further described herein.

### Embodiment 3

The coffee making system in this embodiment provides an improvement based on the above embodiment, and the technical content disclosed in the above embodiment is not repeatedly described. The content disclosed in the above embodiment also belongs to the content disclosed in this embodiment.

The difference between the coffee making system shown in this embodiment and that the above embodiment lies in that the steam heating boiler 12 still adopts the structure of the above embodiment, and the extraction heating boiler 5 is an instant heating boiler adopted in existing coffee machines, which can be referred to the description in the above embodiment.

### Embodiment four

The coffee making system in this embodiment provides an improvement based on the above embodiment, and the technical content disclosed in the above embodiment is not repeatedly described. The content disclosed in the above embodiment also belongs to the content disclosed in this embodiment.

The difference between the coffee making system shown in this embodiment and that the above embodiment lies in that both the extraction heating boiler 5 and the steam heating boiler 12 are instant heating boilers adopted in existing coffee machines, which can be referred to the description in the above embodiment.

Finally, it should be stated that the above embodiments are only used to illustrate the technical solutions of the present disclosure, and not to limit them; although the present disclosure has been described in detail with reference to the aforementioned embodiments, it should be understood by those skilled in the art that modifications can still be made to the technical solutions recorded in the above embodiments, or equivalent replacements can be made for some or all of the technical features therein; and these modifications or replacements do not cause the essence of the corresponding technical solutions to depart from the scope of the technical solutions in the embodiments of the present disclosure.

## Claims

1. A coffee making system, comprising a sub-mother boiler, an extraction heating boiler, and a steam heating boiler, wherein the sub-mother boiler comprises a mother boiler and a sub-boiler arranged in the mother boiler, and
the mother boiler is in communication with the extraction heating boiler, and the sub-boiler is in communication with the steam heating boiler.

2. The coffee making system according to claim 1, wherein the coffee making system further comprises a water storage container, an extraction boiler pump, and a steam boiler pump, wherein
the mother boiler is in communication with the water storage container through the extraction boiler pump, and the sub-boiler is in communication with the water storage container through the steam boiler pump.

3. The coffee making system according to claim 2, wherein the coffee making system further comprises a coffee extraction component and a milk frothing component, the coffee extraction component is in communication with the extraction heating boiler, and the milk frothing component is in communication with the steam heating boiler.

4. The coffee making system according to claim 3, wherein the coffee making system further comprises a first three-way valve, a switch valve, a first waste water container, a first pressure detecting component, and a first pressure limiting valve, wherein
an outlet of the extraction heating boiler is in communication with the coffee extraction component and the first waste water container respectively via the first three-way valve, an exhaust port of the extraction heating boiler is in communication with the first waste water container via the switch valve;
the first pressure detector is provided in the extraction heating boiler and is configured to detect a water pressure of the extraction heating boiler;
the first pressure limiting valve is provided on a pipeline in communication between the first three-way valve and the water outlet of the extraction heating boiler; and
the mother boiler is in communication with the first waste water container via a pressure relief pipeline, and a pressure valve is arranged on the pressure relief pipeline.

5. The coffee making system according to claim 4, wherein the extraction heating boiler comprises a first boiler supporting main body, and a first boiler shell, a first heating member, and a first conveying pipe member which are embedded in the first boiler supporting main body; the first heating member and the first conveying pipe member are arranged around a periphery of the first boiler shell, and the first heating member is arranged close to the first boiler shell;
the first boiler shell is provided with a first heating storage cavity, and a water inlet, a water outlet, and an exhaust port which are in communication with the first heating storage cavity; the first conveying pipe member is in communication with the water inlet of the first heating storage cavity; and
the first pressure detector is provided on a pipeline in communication between the first conveying pipe member and a water inlet of the first heating storage cavity, and the first pressure limiting valve is provided on a pipeline in communication between the first three-way valve and a water outlet of the first heating storage cavity.

6. The coffee making system according to claim 3, wherein the extraction heating boiler is an instant heating boiler.

7. The coffee making system according to claim 3, wherein the coffee making system further comprises a second three-way valve, a second waste water container, and a second pressure limiting valve; a gas outlet of the steam heating boiler is respectively in communication with the milk frothing component and the second waste water container via the second three-way valve; and
the second pressure limiting valve is arranged on a pipeline in communication between the second three-way valve and the gas outlet of the steam heating boiler.

8. The coffee making system according to claim 7, wherein the steam heating boiler comprises a second boiler supporting main body, and a second boiler shell, a second heating member, and a second conveying pipe member which are embedded in the second boiler supporting main body; the second heating member and the second conveying pipe member are arranged surrounding a periphery of the second boiler shell, and the second heating member is arranged close to the second boiler shell; and
the second boiler shell forms a second heating storage cavity, and an inlet end and a gas outlet which are connected with the second heating storage cavity; the second conveying pipe member is in communication with an inlet end of the heating storage cavity; the second pressure limiting valve is arranged on a pipeline in communication between the second three-way valve and a gas outlet of the second heating storage cavity.

9. The coffee making system according to claim 3, wherein the steam heating boiler is an instant heating boiler.

10. The coffee making system according to any one of claims 1 to 9, wherein the sub-mother boiler further comprises a third heating member, and the third heating member is arranged at an inner bottom of the mother boiler and arranged surrounding a periphery of the sub-boiler;
the mother boiler is provided in a cylindrical structure; and/or
the sub-boiler is a pipe member spirally arranged along a height direction of the mother boiler.
